# EUROPEAN PATENT SPECIFICATION

(11) **EP 4 630 884 B1**
(45) Date of publication and mention of the grant of the patent: **23.09.2026**
(21) Application number: 23820885.4
(22) Date of filing: 07.12.2023
(51) Int. Cl.: G04B 1/10, G04B 1/14, F03G 1/02

(54) **ENERGY STORAGE SYSTEM FOR A MECHANICAL WATCH**
ENERGIESPEICHERSYSTEM FÜR EINE MECHANISCHE UHR
SYSTÈME DE STOCKAGE D'ÉNERGIE POUR UNE MONTRE MÉCANIQUE

(30) Priority: 09.12.2022 NL 2033701
(43) Date of publication of application: 15.10.2025
(73) Proprietor: Rolex S.A., 1211 Genève 26 (CH)
(72) Inventor: MAK, Robin, 2629 JD Delft (NL); GIUFFRE, Eola Jessica, 2629 JD Delft (NL); GERLACH, Robyn Frances Louise, 2629 JD Delft (NL)
(74) Representative: van Breda, Jacobus
(86) International application number: PCT/EP2023/084720
(87) International publication number: WO 2024/121313

(56) References cited:
- EP-B1- 3 580 618
- CH-A- 296 719
- US-A1- 2022 043 398

## Description

The invention relates to an energy storage system for a mechanical watch, said energy storage system comprising a spring for storing mechanical energy to drive a mechanism of the mechanical watch.

Such an energy storage system can be used for a barrel of a mechanical watch, but also for supplying energy to another mechanism of the watch - such as a barrel for driving an additional or complication mechanism such as a repeater or an alarm, or for driving a specific mechanism such as a date or month or year or moon phase indication (instantaneous jump in a perpetual calendar, for example), or even for the balance spring of a balance-spring oscillator. The system can also drive a shaft or a rake in partial rotation, or perform a linear displacement.

EP 2 705 271 A1 discloses an energy storage system in the form of a barrel, which is intended to provide a more compact spring at rest, and whose torque is less dependent on the degree of winding of the spring. To that end the just mentioned publications teach to apply energy accumulation curves integral with the spring, which curves are of substantially rectangular cross-section forming alternations with respect to a spiral trajectory over at least a part of the coils of the spring.

CH 296 719 A discloses a watch barrel spring, consisting of a ribbon whose cross-section has a rectangular shape, the smaller dimension of which is parallel to the axis of symmetry. The spring is formed of several concentric rows of turns, which are connected to each other by a connecting curve passing from the diameter of one of the rows to that of the next row. 1

EP 3 580 618 B1 discloses a drive member for a timepiece including at least two monolithic units stacked and connected in series, each of these units including a hub and a rim which are connected by at least one elastic arm.

The object of the invention is to improve the energy density of the spring as applied in the energy storage system of the invention, for which purpose the invention applies the features of one or more of the appended claims.

According to a first aspect of the invention, the spring is circularly shaped and comprises two or more layers, which are circular in shape and which are located along concentric circles of given radius, each layer comprising multiple movable rigid portions, wherein the multiple rigid portions in any one layer are without direct connection to other rigid portions in the same layer, and wherein flexures connect each of the multiple rigid portions in any one layer directly to one or more rigid portions in another layer or layers, said flexures connecting said rigid portions in different layers to form the spring as an integral unit which enables that each rigid portion in a layer is movable with respect to other rigid portions in the same layer and/or with respect to the rigid portions in other layers. This arrangement provides a compact and efficient tool for storing of mechanical energy.

According to preferred embodiments rigid portions of any one layer are connected to rigid portions of a different layer by at least two flexures, preferably at least four flexures, most preferably at least eight flexures.

The spring is circularly shaped to enable that the spring occupies a space or volume which is substantially independent of the amount of energy stored after tensioning or compression of the spring.

Preferably the neighbouring layers of adjacent rigid portions are provided in a same plane as wherein the flexures are deflected. This construction makes a very flat design of the mechanical watch possible.

The versatility of the application of the energy storage system of the invention is supported by arranging that at least a first rigid portion is connected to an input of the energy storage system, and/or that at least a second rigid portion is connected to an output of the energy storage system.

The energy density of the energy that is storable in the system of the invention is simply tunable by arranging that between the first rigid portion and the second rigid portion a preselected quantity of plural further rigid portions are provided.

Preferably the spring has a masonry like structure which means an assembly of repeating elements arranged in a staggered pattern, which enables an embodiment wherein the energy to be stored can be distributed evenly in the system of the invention.

As mentioned the spring is circularly shaped, which not only provides that the energy to be stored is distributed evenly in the system of the invention, but is also advantageous in that the volume of space occupied by the spring is largely independent on the amount of stored energy. In this construction the spring can be loaded for example by moving the rigid portions of a layer with a smallest radius towards each other to form a nearly closed ring, and is unloaded by reversing said motion of the rigid portions of the layer with the smallest radius.

The accompanying drawing, which is incorporated into and forms a part of the specification, illustrates one or more embodiments of the present invention and, together with the description, serves to explain the principles of the invention. The drawing is only for the purpose of illustrating one or more embodiments of the invention and is not to be construed as limiting the invention.

In the drawing:

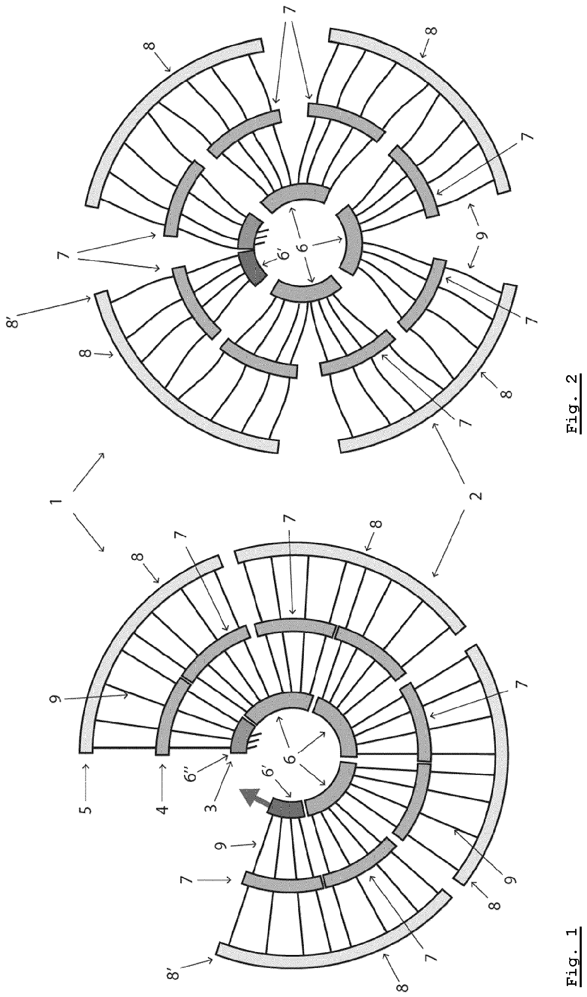

- figures 1 and 2 show a circular energy storage system with a spring according to the invention in unloaded and in loaded form, respectively.

Whenever in the figures the same reference numerals are applied, these numerals refer to the same parts.

Figure 1 shows the general concept of a circularly shaped energy storage system 1 for a mechanical watch or timepiece, in an unloaded stage of its spring **2.** Figure 2 shows the circularly shaped energy storage system 1 of figure **1****,** wherein its spring is in a loaded stage.

Essentially the energy storage system 1 comprises a circularly shaped spring 2 which comprises two or more layers 3, 4, 5, which are circular in shape and which are located along concentric circles of given radius, each layer comprising multiple movable rigid portions **6, 7, 8,** wherein the multiple rigid portions in any one layer 3, 4, 5 are without direct connection to other rigid portions in the same layer 3, 4, 5, and wherein flexures 9 connect each of the multiple rigid portions 6, 7, 8 in any one layer 3, 4, 5 directly to one or more rigid portions 3, 4, 5 in another layer or layers 3, 4, 5, said flexures 9 connecting said rigid portions in different layers 3, 4, 5 to form the spring 2 as an integral unit which enables that each rigid portion 6, 7, 8 in a layer 3, 4, 5 is movable with respect to other rigid portions in the same layer and/or with respect to the rigid portions in other layers. This is illustrated for the circular construction by the differences between figure 2 and figure **1****.**

A preferred embodiment wherein the spring 2 is circularly shaped is shown in figure 1 and figure **2****,** which enables that the spring occupies a space or volume which is substantially independent of the amount of energy stored after tensioning or compression of the spring 2.

In all embodiments it is preferred that the neighbouring layers 3, 4, 5 of adjacent rigid portions are provided in a same plane as wherein the flexures 9 are deflected. This plane can be parallel to the plane formed by the watch, in particular the plane formed by the main plate of the movement of the watch.

With reference to the figures it is remarked that at least a first rigid portion 6' forming part of layer 3 will be connected to an input of the energy storage system, and/or that at least a second rigid portion 6" will be connected to an output of the energy storage system. It is clearly shown that between the first rigid portion 6' and the second rigid portion 6'' there are plural further rigid portions, and that the first rigid portion 6' connected to the input and the second rigid portion 6'' connected to the output are part of the same layer 3. Alternatively, the input and output of the energy storage system can be connected to rigid portions located in different layers. For example, at least a first rigid portion 8' located on the outer layer 5 will be connected to an input of the energy storage system, and/or at least a second rigid portion 6'' located on the inner layer 3 will be connected to an output of the energy storage system. It is clearly shown that between the first rigid portion 8' and the second rigid portion 6" there are plural further rigid portions, optionally part of them even forming part of an intermediate layer 4. Of course, the location of the input and output can be exchanged.

As shown in Figure 1, in the embodiment wherein the spring 2 is circularly shaped, each layer is formed by rigid portions which are circular in shape and which are located along concentric circles of given radius. In the case of the three layers of figure 1, the inner layer 3 has the smallest radius, the intermediate layer 4 has a larger radius than the inner layer 3, and the outer layer 5 has the largest radius.

By comparing figure 1 and figure 2 it is clear that the spring 2 is loaded by moving the rigid portions 6 of a layer 3 with a smallest radius towards each other to form a nearly closed ring as depicted in figure 2, and is unloaded by reversing said motion of the rigid portions 6 of the layer 3 with the smallest radius, as is depicted in figure 1. Alternatively the loading and unloading of the spring can be reversed, i.e. the spring can be loaded by starting from a configuration comparable to the one depicted in figure 2, and by loading the spring by moving the rigid portions 6 of layer 3 with a smallest radius away from each other, and by unloading the spring by reversing said motion. This arrangement enables maximization of the energy density by loading the spring in compression. Alternatively, the spring can be loaded by moving rigid portions of an intermediate layer 7 or of an outer layer 8 towards or away from each other, or can be loaded by moving rigid portions of different layers towards or away from each other. A preload can also be applied to the spring and/or system.

As shown in figure 1, the flexures 9 are formed by single blades or strips. Alternatively, the flexures can have different cross-sections, and/or have a varying dimension along their length and/or height, and/or have slits along part of their length to optimize deformation and/or the distribution of stresses, notably during tensioning or compression of the flexures.

It is further possible to apply different types of flexures and/or rigid parts in the same spring, in order to optimize the storage of energy. For example, the dimensions of the flexures can vary along the circumference and/or from the inner to the outer part of the structure. One possibility is to arrange the dimensions of the flexures 9 and/or the rigid parts 6, 7, 8 to have a varying rigidity, so that for example the exterior elements 8 are less rigid than the interior elements 6, to promote uniform or comparable deformation of the various flexures 9 and elements during tensioning or compression, and therefore to optimize energy storage.

The figures show a spring formed of one layer of material. To increase the amount of energy storable in the system, the height of the spring can be increased. Alternatively, several identical or comparable springs can be stacked and assembled at their respective ends to form a spring extending over several different layers stacked on top of each other. Such an assembly can be done by stacking and assembling the springs in series (meaning that the input of a spring is connected to the output of the preceding spring), or in parallel (meaning that part or all the inputs, respectively part or all the outputs, of the springs are connected together).

As material for the spring, a material that can be formed by micromachining and/or by etching and/or by additive manufacturing can be suitable. In particular, materials such as Silicon or Silicon Carbide, optionally with an additional coating (for example Silicon Oxide), can be especially suitable. A combination of several materials and/or fabrication techniques can also be used.

Embodiments of the present invention can include every combination of features that are disclosed herein independently from each other. Although the invention has been discussed in the foregoing with reference to exemplary embodiments of the invention, the invention is not restricted to these particular embodiment which can be varied in many ways without departing from the invention. The discussed exemplary embodiments shall therefore not be used to construe the appended claims strictly in accordance therewith. On the contrary the embodiments are merely intended to explain the wording of the appended claims without intent to limit the claims to the exemplary embodiments. The scope of protection of the invention shall therefore be construed in accordance with the appended claims only.

## Claims

1. An energy storage system (1) for a mechanical watch, said energy storage system comprising a circularly shaped spring (2) for storing mechanical energy to drive a mechanism of the mechanical watch, wherein the spring (2) comprises two or more layers (3, 4, 5), each layer comprising multiple movable rigid portions (6, 7, 8) which are circular in shape and which are located along concentric circles of given radius, wherein the multiple rigid portions in any one layer (3, 4, 5) are without direct connection to other rigid portions in the same layer (3, 4, 5), and wherein flexures (9) connect each of the multiple rigid portions (6, 7, 8) in any one layer (3, 4, 5) directly to one or more rigid portions (3, 4, 5) in another layer or layers (3, 4, 5), said flexures (9) connecting said rigid portions in different layers (3, 4, 5) to form the spring (2) as an integral unit which enables that each rigid portion (6, 7, 8) in a layer (3, 4, 5) is movable with respect to other rigid portions in the same layer and/or with respect to the rigid portions in other layers.

2. The energy storage system of claim 1, wherein rigid portions (6, 7, 8) of any one layer (3, 4, 5) are connected to rigid portions (6, 7, 8) of a different layer (6, 7, 8) by at least two flexures (9), preferably at least four flexures, most preferably at least eight flexures.

3. The energy storage system of claim 1 or 2, wherein all layers (3, 4, 5) of multiple rigid portions (6, 7, 8) are provided in a same plane as wherein the flexures (9) are deflected.

4. The energy storage system of any one of claims 1 - 4, wherein at least a first rigid portion (6', 8') is connected to an input of the energy storage system, and/or that at least a second rigid portion (6") is connected to an output of the energy storage system.

5. The energy storage system of claim 4, wherein between the first rigid portion (6', 8') and the second rigid portion (6") are plural further rigid portions.

6. The energy storage system of claim 4 or 5, wherein the input and the output of the energy storage system are connected to rigid portions located in different layers.

7. The energy storage system of any one of claim 1 - 6, wherein the spring (2) has a masonry like or staggered structure.

8. The energy storage system according to claims 1 and 4, wherein the spring (2) is loaded by moving the rigid portions (6) of a layer (3) with a smallest radius towards each other to form a nearly closed ring, and is unloaded by reversing said motion of the rigid portions (6) of the layer (3) with the smallest radius.

## Patentansprüche

1. Energiespeichersystem (1) für eine mechanische Uhr, wobei das Energiespeichersystem eine kreisförmige Feder (2) zum Speichern mechanischer Energie zum Antrieb eines Uhrwerks der mechanischen Uhr aufweist, wobei die Feder (2) zwei oder mehr Schichten (3, 4, 5) aufweist, wobei jede Schicht mehrere bewegliche starre Abschnitte (6, 7, 8) aufweist, die kreisförmig sind und entlang konzentrischer Kreise mit einem vorgegebenen Radius angeordnet sind, wobei die mehreren starren Abschnitte in einer beliebigen Schicht (3, 4, 5) keine direkte Verbindung zu anderen starren Abschnitten in derselben Schicht (3, 4, 5) aufweisen, und wobei Biegeelemente (9) jeden der mehreren starren Abschnitte (6, 7, 8) in einer beliebigen Schicht (3, 4, 5) direkt mit einem oder mehreren starren Abschnitten (3, 4, 5) in einer anderen Schicht oder anderen Schichten (3, 4, 5) verbinden, wobei die Biegeelemente (9) die starren Abschnitte in verschiedenen Schichten (3, 4, 5) so verbinden, dass die Feder (2) als eine einheitliche Einheit gebildet wird, die es ermöglicht, dass jeder starre Abschnitt (6, 7, 8) in einer Schicht (3, 4, 5) relativ zu anderen starren Abschnitten in derselben Schicht und/oder relativ zu den starren Abschnitten in anderen Schichten beweglich ist.

2. Energiespeichersystem nach Anspruch 1, wobei starre Abschnitte (6, 7, 8) einer beliebigen Schicht (3, 4, 5) mit starren Abschnitten (6, 7, 8) einer anderen Schicht (6, 7, 8) durch wenigstens zwei Biegeelemente (9), vorzugsweise wenigstens vier Biegeelemente, am bevorzugtesten wenigstens acht Biegeelemente, verbunden sind.

3. Energiespeichersystem nach Anspruch 1 oder 2, wobei sämtliche Schichten (3, 4, 5) von mehreren starren Abschnitten (6, 7, 8) in derselben Ebene angeordnet sind, in der die Biegeelemente (9) ausgelenkt werden.

4. Energiespeichersystem nach einem der Ansprüche 1 bis 4, wobei wenigstens ein erster starrer Abschnitt (6', 8') mit einem Eingang des Energiespeichersystems verbunden ist und/oder wenigstens ein zweiter starrer Abschnitt (6") mit einem Ausgang des Energiespeichersystems verbunden ist.

5. Energiespeichersystem nach Anspruch 4, wobei sich zwischen dem ersten starren Abschnitt (6', 8') und dem zweiten starren Abschnitt (6") mehrere weitere starre Abschnitte befinden.

6. Energiespeichersystem nach Anspruch 4 oder 5, wobei der Eingang und der Ausgang des Energiespeichersystems mit starren Abschnitten verbunden sind, die in unterschiedlichen Schichten angeordnet sind.

7. Energiespeichersystem nach einem der Ansprüche 1 bis 6, wobei die Feder (2) eine mauerwerkartige oder versetzte Struktur aufweist.

8. Energiespeichersystem nach Anspruch 1 und 4, **dadurch gekennzeichnet, dass** die Feder (2) belastet wird, indem die starren Abschnitte (6) einer Schicht (3) mit dem kleinsten Radius aufeinander zu bewegt werden, um einen nahezu geschlossenen Ring zu bilden, und entlastet wird, indem die Bewegung der starren Abschnitte (6) der Schicht (3) mit dem kleinsten Radius umgekehrt wird.

## Revendications

1. Système de stockage d'énergie (1) pour une montre mécanique, lequel système de stockage d'énergie comprend un ressort (2) de forme circulaire destiné à stocker une énergie mécanique pour entraîner un mécanisme de la montre mécanique, dans lequel le ressort (2) comprend au moins deux couches (3, 4, 5), chaque couche comprenant une pluralité de portions rigides mobiles (6, 7, 8) qui sont de forme circulaire et disposées le long de cercles concentriques de rayon donné, les multiples portions rigides d'une même couche (3, 4, 5) étant dépourvues de connexion directe entre elles, et des flexibles (9) reliant chacune des multiples portions rigides (6, 7, 8) d'une couche (3, 4, 5) directement à une ou plusieurs portions rigides (6, 7, 8) d'une autre couche ou de plusieurs autres couches (3, 4, 5), lesdits flexibles (9) reliant lesdites portions rigides de différentes couches pour former le ressort (2) en une unité intégrale, dans lequel chaque portion rigide (6, 7, 8) d'une couche (3, 4, 5) est mobile par rapport aux autres portions rigides de la même couche et/ou par rapport aux portions rigides des autres couches.

2. Système de stockage d'énergie selon la revendication 1, dans lequel les portions rigides (6, 7, 8) d'une couche (3, 4, 5) sont reliées aux portions rigides (6, 7, 8) d'une couche différente par au moins deux flexibles (9), de préférence au moins quatre, et plus préférablement au moins huit flexibles.

3. Système de stockage d'énergie selon l'une quelconque des revendications 1 ou 2, dans lequel toutes les couches (3, 4, 5) comprenant des multiples portions rigides (6, 7, 8) sont disposées dans un même plan dans lequel les flexibles (9) sont défléchis.

4. Système de stockage d'énergie selon l'une quelconque des revendications 1 à 3, dans lequel au moins une première portion rigide (6', 8') est reliée à une entrée du système de stockage d'énergie, et/ou au moins une seconde portion rigide (6") est reliée à une sortie du système de stockage d'énergie.

5. Système de stockage d'énergie selon la revendication 4, dans lequel une pluralité de portions rigides supplémentaires est disposée entre la première portion rigide (6', 8') et la seconde portion rigide (6").

6. Système de stockage d'énergie selon l'une quelconque des revendications 4 ou 5, dans lequel l'entrée et la sortie du système de stockage d'énergie sont reliées à des portions rigides situées dans des couches différentes.

7. Système de stockage d'énergie selon l'une quelconque des revendications 1 à 6, dans lequel le ressort (2) présente une structure de type maçonnerie ou décalée.

8. Système de stockage d'énergie selon les revendications 1 et 4, dans lequel le ressort (2) est chargé en déplaçant les portions rigides (6) d'une couche (3) ayant le plus petit rayon les unes vers les autres pour former un anneau presque fermé,
et est déchargé en inversant ce mouvement des portions rigides (6) de la couche (3) ayant le plus petit rayon.
